**Europäisches Patentamt**

(19) **European Patent Office**

**Office européen des brevets**

(11) Veröffentlichungsnummer: **0 080 548**

**A1**

(12) # EUROPÄISCHE PATENTANMELDUNG

(21) Anmeldenummer: 81830238.2

(22) Anmeldetag: 27.11.81

(51) Int. Cl.³: **G 02 C 5/16**

(43) Veröffentlichungstag der Anmeldung:
08.06.83 Patentblatt 83/23

(84) Benannte Vertragsstaaten:
AT DE FR GB IT NL

(71) Anmelder: **Opto-Line S.r.l.**
**Zona Industriale**
**I-31040 Segusino Treviso(IT)**

(72) Erfinder: **Gallonetto, Augusto**
**Zona Industriale c/o Opto-Line**
**I-31040 Segusino (TV)(IT)**

(74) Vertreter: **Sneider, Massimo**
**Lenzi & C. Via del Tritone 201**
**I-00187 Roma(IT)**

(54) **Verbesserungen an den Brillenbügeln.**

(57) Mit der vorliegenden Erfindung bezweckt man einige Verbesserungen an den Brillenbügeln, u.zw. derart, dass jeder Brillenbügel im wesentlichen in zwei Halbbügel (4,5) unterteilt ist, indem diese Halbbügel (4,5) mittels einer gebogenen, vorzugsweise blattfederartig geformten, aus Metall oder anderem geeigneten Material gefertigten Lamelle (1) gegeneinander abgewinkelt sind, wobei die Lamelle (1) und die Trennungszone (6) der beiden Halbbügel (4,5) von einer vorzugsweise zylindrischen, mit einer Axialbohrung versehenen Muffe (7) überdeckt sind (siehe Fig. 1).

FIG 1

EP 0 080 548 A1

Anmelder : Opto-Line S.r.l. , Segusino (Treviso) Italien

"Verbesserungen an den Brillenbügeln"

Beschreibung

Es ist bekannt , dass eine der erheblichsten , vom Tragen der Brille herrührenden Unannehmlichkeiten jene ist , diese nach einer gewissen Gebrauchsdauer leicht aus der richtigen Lage rutschen zu verspüren . Dieser Übelstand erwächst grossenteils aus der zunehmenden Erweiterung der Bügel sei es durch eine Abweichung der im Scharnierpunkt eingesetzten Schrauben sei es durch eine tatsächliche Verformung , welche die Bügel erfahren , indem sie ihre ursprüngliche Biegung verlieren , welche der Brille gestattet die optimale Lage gegenüber den Augen des Benutzers aufrecht zu erhalten .

Seit langem wurden seitens der fortschrittlichsten Industrien viele Versuche angestellt um diesem Übelstand abzuhelfen , wie z.B. in den Bügeln eingelassene Lamellen , welche es ihnen gestatten die Elastizität für eine grössere Zeitdauer aufrecht zu erhalten . Dieses System hat jedoch bewiesen das Problem nicht vollkommen zu lösen sei es vom baulichen Gesichtspunkt sei es vom Gesichtspunkt der Wirksamkeit .

Gegenstand der vorliegenden Erfindung ist die Schaffung von elastischen Brillenbügeln , welche gegen

die verzeichneten Übelstände Abhilfe bringen .

Bei einer bevorzugten Ausführungsform wird eine vorzugsweise aus hochelastischem Metall gefertigte und zweckdienlich geformte Lamelle vorzugsweise in der Nähe des Scharniers an jedem Ende eines normalen , in zwei untereinander entfernte Teile unterteilten Brillenbügels befestigt .

Erfindungsgemäss wird die Verbindungszone der beiden Bügelteile mit einem ästhetisch geformten gefälligen Element überdeckt , welches die zweifache Aufgabe hat den Verbindungspunkt zu überdecken und die Elastizität der Lamelle zurückzuhalten .

Dieser und weitere Gegenstände und Vorteile der vorliegenden Erfindung sind deutlicher der eingehenden nachstehenden Beschreibung einiger ihrer bevorzugten Ausführungsformen zu entnehmen , welche hier nur beispielsweise unter Bezugnahme auf die anliegenden schematischen Zeichnungen angegeben sind . In den Zeichnungen selbst zeigen :

Fig. 1 einen Brillenbügel gemäss seiner ersten Ausführungsform ,

Fig. 2 den gleichen Brillenbügel wie in Fig. 1 , von der Seite gesehen ,

Fig. 3 im Profil eine seitliche formgebende Bearbeitung des muffenartigen Verbindungs- und Zurückhalteelementes , und

· Fig. 4 - 9 im Schnitt einige Abänderungen an der
Ausführungsform gemäss Fig. 1 - 3 .

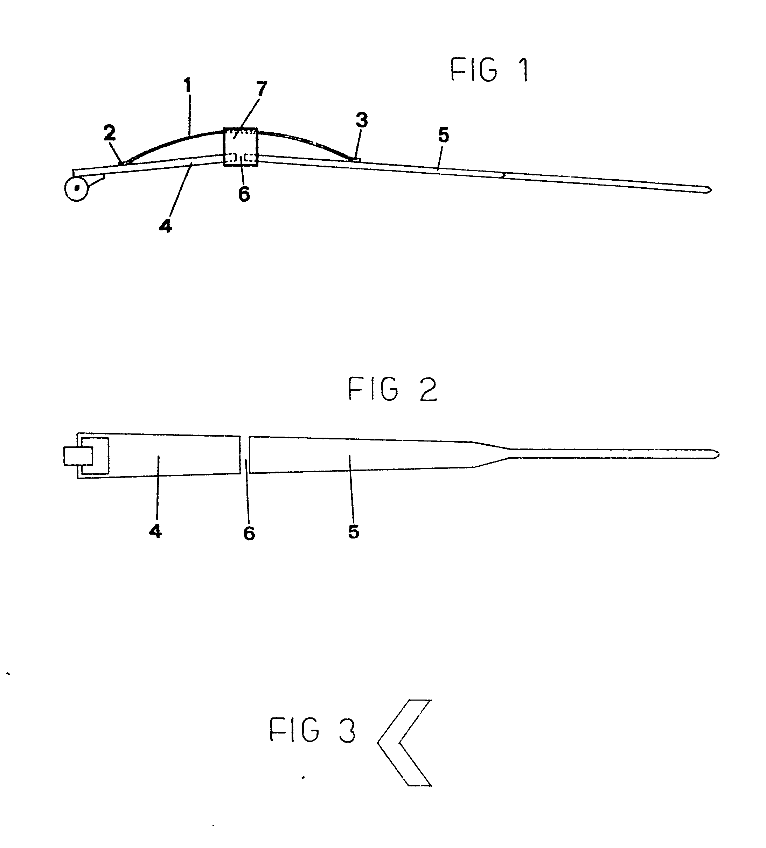

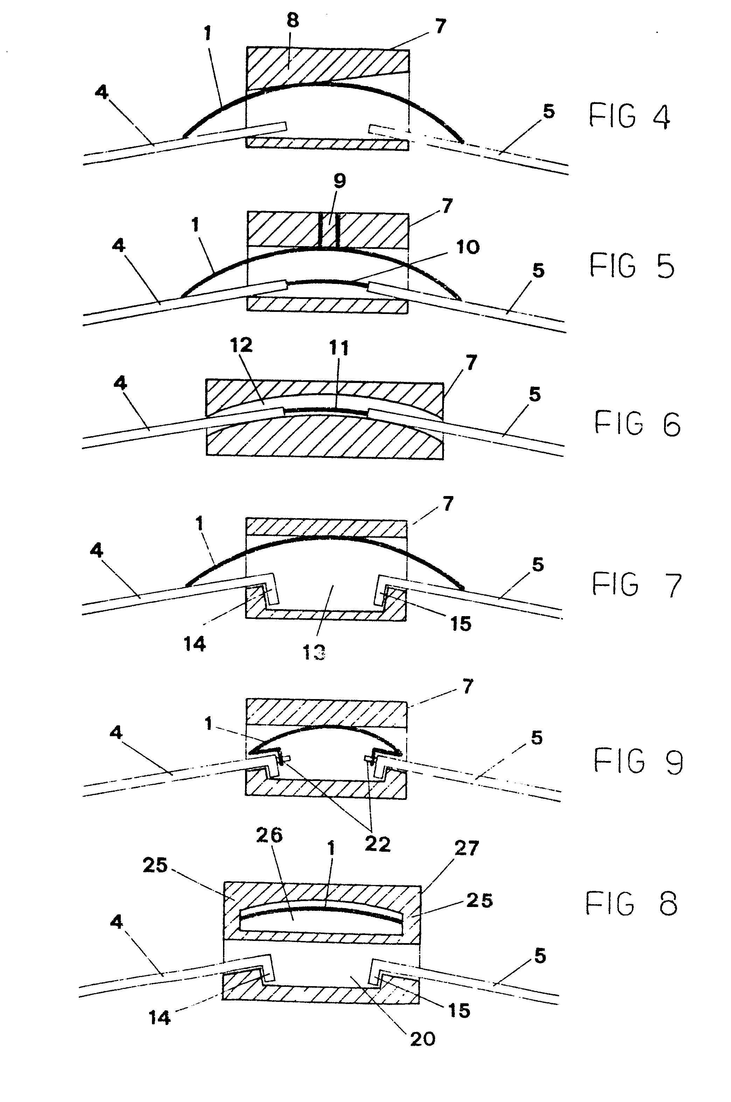

Bezugnehmend auf die Zeichnungen , und zwar auf
Fig. 1 - 3 , bestehen die Verbesserungen an den Brillenbügeln bei der bevorzugten Ausführungsform der vorliegenden Erfindung aus einer mit Hilfe eines beliebigen
geeignet angesehenen Mittels , z.B. mittels Schweissung , an den Elementen 4 und 5 befestigten Lamelle 1 ,
welche den Bügel bilden und voneinander mit zweckdienlichem Abstand getrennt sind . Der Verbindungspunkt ist
von einem Element 7 mit viereckigem Verlauf überdeckt ,
dessen Hauptaufgabe jene ist , die Elastizität der Lamelle 1 zurückzuhalten und somit das Bügelelement 5 gegen den Schädel des Gebrauchers zu drücken , derart um
die Brille in der geeignetsten Lage zu halten . Das Element 7 wird natürlich so geformt und dekoriert sein , um
ein gültiges Zierelement zu bilden , wie beispielsweise
in Fig. 3 veranschaulicht .

Unter Beibehaltung des nunmehr zum Ausdruck gebrachten Grundgedankens eines in zwei Elemente 4 und 5 unterteilten Brillenbügels , welche untereinander mittels
einer Lamelle 1 verbunden sind , die an den Elementen 4
und 5 befestigt ist und deren Krümmung und Elastizität
von den Abmessungen des Muffenelementes 7 bestimmt sind , sind naheliegend die Abänderungen , die an diesem Gedanken vorgenommen werden können . Wie im einzelnen aus Fig. 4 zu entnehmen ist , sind die beiden durch das elastische Element 1 verbundenen Bügelteile 4 und 5 in der Muffe 7 aufgenommen , deren innere Formgebung bei 8 zumindestens teilweise kegelstumpfförmig ist , sodass es mit einer axialen Verstellung der Muffe 7 gegenüber den Halbbügeln 4 und 5 möglich ist , eine Änderung der Biegung des einen Halbbügels 4 gegenüber dem Halbbügel 5 zu erzielen und als Folge davon eine grössere oder geringere Adhäsion des Bügels am Kopf des Gebrauchers .

Wie aus Fig. 5 hervorgeht , ist die Lamelle 1 anstatt an den beiden Halbbügeln 4 und 5 befestigt zu sein , z.B. bei 9 an der Muffe 7 entsprechend befestigt , und die Halbbügel 4 und 5 sind untereinander mittels einer Verbindungslamelle 10 festgehalten . Diese Lösung gestattet es die Möglichkeit zu haben , das elastische Element 1 mit der Krümmung zu ersetzen , welche man für eine bestimmte Schädelgestalt am zweckdienlichsten hält .

Eine entsprechende Lösung ist in Fig. 6 dargestellt , bei der das Muffenelement 7 mit einer angemessen geformten Bohrung 12 versehen ist , in der die beiden untereinander mittels eines elastischen Elementes 11 verbundenen Halbbügel 4 und 5 eine Aufnahme finden . Wie bei 12 ange-

0080548

geben ist der innere Hohlraum der Muffe 7 gekrümmt , und die gekrümmte Bohrung gestattet es die beiden Halbbügel gegeneinander zu orientieren , derart dass der Halbbügel 5 gegenüber dem Halbbügel 4 eine Abwinklung einnimmt . In diesem Falle wird es natürlich angebracht sein , dass die Muffe 7 aus einem an und für sich elastischen und relativ biegsamen Material geferigt ist .

Wie vorstehend bereits kurz angedeutet wurde , müssen die beiden Halbbügel 4,5 irgendwie untereinander verbunden werden , um eine ungehörige gegenseitige Entfernung zu vermeiden . Zu diesem Zweck ist die Verankerung der Lamelle 1 vorgesehen , oder die Verbindung der Halbbügel mittels eines biegsamen Elementes 10,11 . Bei einer in Fig. 7 veranschaulichten Abänderung ist die Lamelle 1 in einer Muffe 7 untergebracht , die axiale Bohrung der letzteren ist jedoch mit einer Einbuchtung 13 versehen , in der die zweckdienlich abgebogenen Enden 14,15 der Halbbügel 4,5 eine Aufnahme finden können . Dadurch erreicht man , dass die einmal in die Muffe 7 eingebrachten Halbbügel 4,5 in axialer Richtung untereinander gebunden bleiben durch den Effekt der Verankerung , den sie von ihren Zahnabschnitten 14,15 empfangen .

Bei dieser Lösung ist die Lamelle 1 in der axialen Bohrung der Muffe 7 freibeweglich gelagert , und diese

0080548

Lagerung gestattet es bei einer Verstellung der Muffe 7 die Biegung des Halbbügels 5 gegenüber dem Halbbügel 4 zu verstellen .

Angesichts der Möglichkeit , dass die Lamelle 1 aus der Muffe 7 herausfallen kann , ist bei der in Fig. 8 gezeigten Lösung eine Muffe 27 vorgesehen , in der zwei axiale Bohrungen 20 und 26 eingearbeitet sind , wobei in der Bohrung 26 die zweckdienlich gebogene elastische Lamelle 1 gelagert ist , welche an den an den Enden der Bohrung 26 vorgesehenen Ansätzen 25 anliegt , während in der Bohrung 20 die bei 14 und 15 hakenartig abgebogenen Enden der Halbbügel 4,5 gelagert sind . Diese Lösung gestattet es durch Änderung der Lage der Muffe 27 die Lage des Halbbügels 5 gegenüber dem Halbbügel 4 abzuändern .

Als letzte Lösung (Fig. 9) ist schliesslich die Verbindung der beiden Halbbügel 4 und 5 mittels einer zweckdienlich gebogenen Lamelle 1 vorgesehen , welche an ihren Enden zweckmässig mit Schlitzlöchern 22 versehen ist , die an Zähnen an den Enden der Halbbügel 4 und 5 eingreifen . Die beiden zusammen mit der Lamelle 1 in der Muffe 7 eingeschlossenen Halbbügel 4,5 sind somit untereinander fest verbunden , u.zw. ohne dass dafür ein besonderer Verbindungsarbeitsgang erforderlich wäre .

Wie offensichtlich ist , wurden alle diese Änderungen nur beispielsweise angeführt , um die Vielfältigkeit der Arten anzugeben , mit denen es möglich ist das Problem zu lösen , wobei der Grundgedanken immer darauf beruht jeden Brillenbügel in zwei Elemente zu unterteilen , welche miteinander verbunden und gegeneinander durch die Wirkung eines relativ biegsamen , elastischen Elementes abgebogen sind , welches also den beiden Halbbügeln eine gewisse gegenseitige Abwinklung verleiht .

Es ist weiterhin offensichtlich , dass noch viele weitere Änderungen , bzw. Verbesserungen vorgenommen werden können , welche sich bei der Herstellung und bei der praktischen Verwendung des Erfindungsgegenstandes als angebracht erweisen sollten , ohne damit vom eigentlichen Erfindungsgedanken abzuweichen , welcher aus den nachstehenden Ansprüchen nochmals klar zu entnehmen ist .

Anmelder : Opto-Line S.r.l. , Segusino (Treviso) Italien 0080548

"Verbesserungen an den Brillenbügeln"

Patentansprüche

1.)Verbesserungen an den Brillenbügeln , dadurch gekennzeichnet , dass jeder Brillenbügel in zwei Halbbügel (4,5) unterteilt ist , indem diese Halbbügel (4, 5) mittels einer gebogenen , vorzugsweise blattfederartig geformten , aus Metall oder anderem geeigneten Material gefertigen Lamelle (1) gegeneinander abgewinkelt sind , wobei die Lamelle (1) und die Trennungszone (6) der beiden Halbbügel (4,5) von einer vorzugsweise zylindrischen , mit einer Axialbohrung versehenen Muffe (7) überdeckt sind (Fig. 1) .

2.)Verbesserungen an den Brillenbügeln , nach Anspruch 1 , dadurch gekennzeichnet , dass die beiden Halbbügel (4,5) untereinander durch die Blattfeder (1) verbunden sind , welche deren Abwinklung bildet .

3.)Verbesserungen an den Brillenbügeln , nach Anpruch 1 und 2 , dadurch gekennzeichnet , dass die beiden Halbbügel (4,5) untereinander durch ein beliebiges biegsames Glied (10)  verbunden sind , wobei die Blattfeder (1) im Inneren der Muffe (7) befestigt oder allenfalls gelagert ist .

4.)Verbesserungen an den Brillenbügeln , nach den

0080548

vorstehenden Ansprüchen , dadurch gekennzeichnet ,
dass die beiden Halbbügel (4,5) jedes Bügels untereinander durch ein biegsames Element verbunden sind ,
wobei die Abdeckmuffe (7) mit einer gekrümmten axialen Längsbohrung (12) versehen ist , derart um eine Abwinklung eines Halbbügels gegenüber einem anderen zu
erlauben .

5.) Verbesserungen an den Brillenbügeln , nach
einem oder mehreren der vorstehenden Ansprüche , dadurch gekennzeichnet , dass die beiden Halbbügel (4,5)
an den einander zugewandten Enden in einen Haken (14,
15) auslaufen , welche in eine zweckdienliche Ausnehmung im Inneren der Abdeckmuffe und/oder in Ausnehmungen an den Enden der Blattfeder eingreifen .

6.) Verbesserungen an den Brillenbügeln , nach
einem oder mehreren der vorstehenden Ansprüche , im
wesentlichen wie beschrieben und erläutert .

0080548
1/2

FIG 1

FIG 2

FIG 3

FIG 4

FIG 5

FIG 6

FIG 7

FIG 9

FIG 8

Europäisches
Patentamt

**EUROPÄISCHER RECHERCHENBERICHT**

**0080548**

Nummer der Anmeldung

EP 81 83 0238

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | FR - A - 2 266 181 (A. GALLONETTO UND A. GALLONETTO) <br> * Seite 1, Zeile 30 - Seite 2, Zeile 10; Abbildung * <br> & DE - U - 7 431 349 <br> -- | 1,2,6 |
| A | DE - U - 7 511 637 (MARWITZ & HAUSER) <br> * Seite 5, Absatz 5 - Seite 6, Absatz 1; Abbildungen 1-10 * <br> -- | 1-6 |
| A | GB - A - 2 022 858 (MARWITZ & HAUSER) <br> * Seite 2, Zeilen 32-41; Seite 2, Zeilen 70-90; Abbildungen 1-5 * <br> & DE - A - 2 825 712 <br> -- | 1,2,6 |
| A | FR - A - 2 486 252 (FABRIQUE MAGISTER) <br> * Seite 2, Zeilen 14-23; Seite 1, Zeilen 28-32; Abbildungen 1-6 * <br> ---- | 1,2,6 |

**KLASSIFIKATION DER ANMELDUNG (Int Cl ³)**

G 02 C 5/16

**RECHERCHIERTE SACHGEBIETE (Int Cl ³)**

G 02 C 5/00

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 22-04-1982 | SARNEEL |

EPA form 1503.1   06.78